# EUROPEAN PATENT APPLICATION

(11) **EP 4 425 021 A1**
(43) Date of publication of application: **04.09.2024**
(21) Application number: 22871092.7
(22) Date of filing: 29.09.2022
(51) Int. Cl.: F16K 31/04, F16K 31/53, F16K 37/00

(54) **ELECTRIC CONTROL ACTUATOR, TAIL GAS TREATMENT SYSTEM, AND VEHICLE**

(30) Priority: 29.10.2021 CN 202111279400
(71) Applicant: Ningbo Colet Electrical Appliances Co., Ltd., Ningbo, Zhejiang 315506 (CN); Ningbo Xieno Electromechanical Co., Ltd., Ningbo, Zhejiang 315506 (CN); Ningbo Xiecheng Power Tools Co., Ltd., Ningbo, Zhejiang 315506 (CN)
(72) Inventor: WU, Bing, Ningbo 315000 (CN); HE, Zhoutong, Ningbo 315000 (CN); WANG, Wei, Ningbo 315000 (CN); ZHOU, Kaifeng, Ningbo 315000 (CN)
(74) Representative: Scholl, Matthias
(86) International application number: PCT/CN2022/122481
(87) International publication number: WO 2023/071692

(57) **Abstract**

An electronic control actuator includes a housing, a transmission structure, and a drive unit. The housing includes an installation space. The transmission structure and the drive unit are disposed in the installation space. The drive unit is in transmission connection to the transmission structure. The drive unit includes a drive shaft, a driving gear, and a drive motor. The driving gear sleeves the drive shaft. The transmission structure includes a reduction gear and a transmission assembly. The reduction gear and the transmission assembly are disposed in the installation space. The reduction gear is meshed with the driving gear. The transmission assembly is in transmission connection to the reduction gear. The transmission assembly includes a drive shaft hole. The drive shaft passes through the drive shaft hole and is in transmission connection to the reduction gear.

## Description

### CROSS-REFERENCE TO RELATED APPLICATIONS

This application claims foreign priority to Chinese Patent Application No. 202111279400 .7 filed Oct. 29, 2021, the contents of which, including any intervening amendments thereto, are incorporated herein by reference.

### DESCRIPTION

The disclosure relates to the field of automotive electrical equipment, and more specifically, to an electronic control actuator, an exhaust-gas treatment system and a vehicle comprising the same.

As the automotive industry advances, the electronic control actuator has become a critical component of automobiles and has a significant impact on the development of the automotive industry.

Currently, the electronic control actuator on the market is widely used in the exhaust gas treatment system of small cars to regulate the opening or closing of the exhaust valve. The electronic control actuator is driven by a drive motor to rotate the transmission structure, to adjust the valve opening. However, the transmission structure in existing technology is complex, where the driving gear of the motor shaft is meshed with the transmission gear and the transmission gear is meshed with the output gear. The driving gear causes the transmission gear and the output gear to rotate. The motor shaft, transmission shaft, and output shaft are usually arranged in parallel, resulting in increased length, space occupied by the electronic control actuator, and production costs.

To achieve the aforesaid objective, the disclosure provides an electronic control actuator having an appropriate internal structure and overall size.

To solve the aforesaid problems, the first objective of the disclosure is to provide an electronic control actuator; the electronic control actuator comprises a housing, a transmission structure, and a drive unit; the housing comprises an installation space; the transmission structure and the drive unit are disposed in the installation space; the drive unit is in transmission connection to the transmission structure; the drive unit comprises a drive shaft, a driving gear, and a drive motor; the driving gear sleeves the drive shaft; the transmission structure comprises a reduction gear and a transmission assembly; the reduction gear and the transmission assembly are disposed in the installation space; the reduction gear is meshed with the driving gear; the transmission assembly is in transmission connection to the reduction gear; the transmission assembly comprises a drive shaft hole; the drive shaft passes through the drive shaft hole and is in transmission connection to the reduction gear; as the drive unit works, the drive shaft rotates, causing the reduction gear and the transmission assembly to rotate as well.

Specifically, when the drive shaft passes through the drive shaft hole, a distance between the transmission assembly and the reduction gear is reduced, resulting in a space-saved design and lower costs; the drive unit is further in transmission connection to the reduction gear so as to drive the rotation of the reduction gear; the transmission assembly is connected to both a valve and the reduction gear so as to adjust the valve opening.

In a class of this embodiment, the electronic control actuator further comprises a mounting plate disposed between the transmission structure and the drive unit; the mounting plate comprises a first shaft hole; the driving gear passes through the first shaft hole and is meshed with the reduction gear.

Specifically, the drive shaft hole passes through the first shaft hole and the drive unit is in transmission connection to the transmission structure; as the drive unit works, the driving gear rotates and causes the reduction gear to rotate as well, so as to adjust the valve opening.

In a class of this embodiment, the mounting plate further comprises a third mounting position; the transmission assembly further comprises an output shaft and a sector gear; the output shaft is disposed in the third mounting position; the sector gear sleeves the output shaft; and the sector gear is meshed with the reduction gear.

Specifically, the output shaft passes through the third mounting position and is fixed on the mounting plate; understandably, when the mounting plate is not needed, the transmission assembly is only disposed on the housing, increasing the number of the components in the transmission assembly; thus, the mounting plate enhances the space utilization in the electronic control actuator.

In a class of this embodiment, the mounting plate further comprises a second mounting position; the reduction gear comprises a transmission shaft, a first gear, and a second gear; the transmission shaft is disposed in the second mounting position; the first gear sleeves the transmission shaft and is meshed with the driving gear; the second gear sleeves the transmission shaft and is meshed with the sector gear; the second gear is disposed between the mounting plate and the first gear, or the mounting plate is disposed between the first gear and the second gear.

Specifically, the transmission shaft passes through the second mounting position and fixed on the mounting plate; the first gear and the second gear are disposed near the mounting plate, reducing the length of the transmission shaft, enhancing the space utilization and lowering the costs.

In a class of this embodiment, the drive shaft hole is a curved slot formed on the sector gear; the driving gear passes through the first shaft hole and the curved slot to mesh with the first gear, or the driving gear passes through the curved slot and the first shaft hole to mesh with the first gear.

Specifically, the curved slot enhances the space utilization in the sector gear; understandably, the limited number of teeth on the sector gear imposes a constraint on the angle of rotation of the sector gear; as the sector gear rotates, the driving gear move within the driving shaft hole; the valve is opened or closed at least once during the clockwise or counterclockwise rotation of the sector gear; the driving shaft hole is used to reduce the distance between the sector gear and the reduction gear without affecting the rotation of the sector gear, leading to a more compact structure for the electronic control actuator; additionally, the sector gear is disposed on the output shaft and rotates along a curved path, and the curved slot facilitates the rotation of the driving gear, thereby improving the transmission efficiency of the transmission assembly, reducing the structure of the electronic control actuator, and lowering the costs.

In a class of this embodiment, a distance d between a motion trajectory of the drive shaft within the drive shaft hole and a root circle of the sector gear is constant.

Specifically, the constant distance d prevents collision between the sector gear and the drive shaft, protecting the driving gear.

In a class of this embodiment, the transmission structure further comprises a reset structure disposed on the output shaft; a gap is formed between the reset structure and the sector gear; the reset structure comprises a spring and a fixing plate; the fixing plate is fixed on the output shaft and comprises a fixed position; the spring is wrapped around the output shaft; one end of the spring is connected to the fixed position; and the other end of the spring is connected to housing.

Specifically, when the drive shaft passes through the drive shaft hole and the driving gear is meshed with the reduction gear, the gap prevents collision between the driving shaft and the reset structure, protecting both the driving gear and the reset structure; when the driving gear is driven by the drive unit to rotate, the reduction gear, the sector gear, and the output shaft rotate accordingly; the spring is fixed on the output shaft via the fixing plate; as the output shaft rotates, the spring is compressed or stretched; when the drive unit stops working, the reduction gear, the sector gear and the output shaft stops rotating, the spring returns to its original shape by driving the fixing plate and the output shaft to rotate in the opposite direction with a deformation force.

The disclosure also provides an exhaust-gas treatment system comprising the electronic control actuator and is used in a vehicle.

Specifically, the electronic control actuator is disposed on the exhaust-gas treatment system to ensure a long-term normal operation of the exhaust-gas treatment system.

In a class of this embodiment, the exhaust-gas treatment system further comprises an exhaust-gas circulation pipeline provided with a valve shaft; the valve shaft is connected to the output shaft to open or close a valve.

Specifically, when the drive unit works, the output shaft drives the valve shaft to rotate, allowing for precise control of the valve for exhaust-gas treatment.

In another aspect, the disclosure provides a vehicle comprising the exhaust-gas treatment system.

Specifically, by accurately adjusting the valve opening under different engine operating conditions, the electronic control actuator increases the engine efficiency, reduces fuel consumption and extends the service life of the engine.

The following advantages are associated with the disclosure:
i) the drive unit is in transmission connection to the reduction gear that enables the rotation of the reduction gear; the transmission assembly is in transmission connection to the reduction gear and further connected to the valve to adjust the valve opening;
ii) as the drive shaft passes through the drive shaft hole, a distance between the transmission assembly and the reduction gear is reduced, resulting in a space-saving design and lower costs; and
iii) the gap is used to prevent collision between the driving shaft and the reset structure, thus protecting both the driving gear and the reset structure.

FIG. 1 is a perspective view of an electronic control actuator according to one example of the disclosure;
FIG. 2 is a perspective view of a base in FIG. 1;
FIG. 3 is a perspective view of a combination of a base and a transmission structure in FIG. 1;
FIG. 4 is a perspective view of a combination of a transmission structure, a drive unit and a mounting plate in FIG. 3;
FIG. 5 is a perspective view of a sector gear in FIG. 4;
FIG. 6 is a perspective view of a sector gear, a first gear, and a mounting plate in FIG. 4;
FIG. 7 is a perspective view of a mounting plate in FIG. 6;
FIG. 8 is a top view of the combination in FIG. 3;
FIG. 9 is a sectional view taken from line A-A in FIG. 8;
FIG. 10 is a local enlarge view of part B in FIG. 9; and

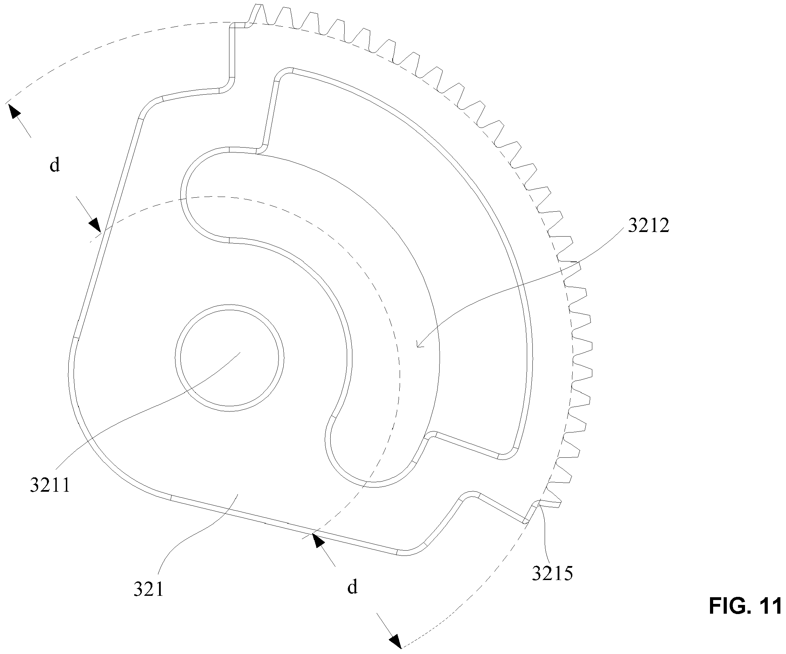

FIG. 11 is a perspective view of a sector gear and a drive shaft hole in FIG. 10.

In the drawings, the following reference numbers are used: 1. Electronic control actuator; 10. Base; 11. First installation space; 111. First mounting position; 20. Cover plate; 21. Opening; 30. Transmission structure; 31. Reduction gear; 311. First gear; 312. Second gear; 313. First bearing; 314.Transmission shaft; 32. Transmission assembly; 321. Sector gear; 3211. Second shaft hole; 3212. Drive shaft hole; 3213. First end; 3214. Second end; 3215. Root; 322. Output shaft; 323. Second bearing; 324. Third bearing; 33. Reset structure; 331. Spring; 332. Fixing plate; 50. Drive unit; 51. Drive shaft; 52. Driving gear; 53. Drive motor; 60. Circuit board; 70. Mounting plate; 71. First shaft hole; 72. Second mounting position; and 73. Third mounting position.

To further illustrate the disclosure, embodiments detailing an electronic control actuator, an exhaust-gas treatment system and a vehicle are described below. It should be noted that the following embodiments are intended to describe and not to limit the disclosure.

### Example 1

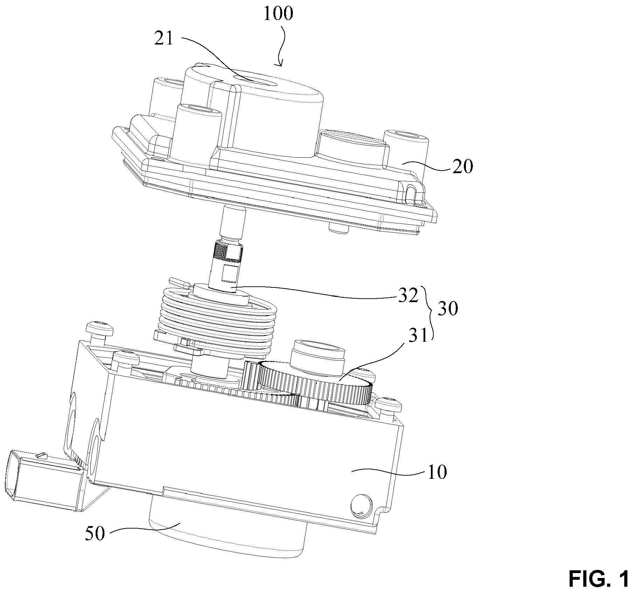

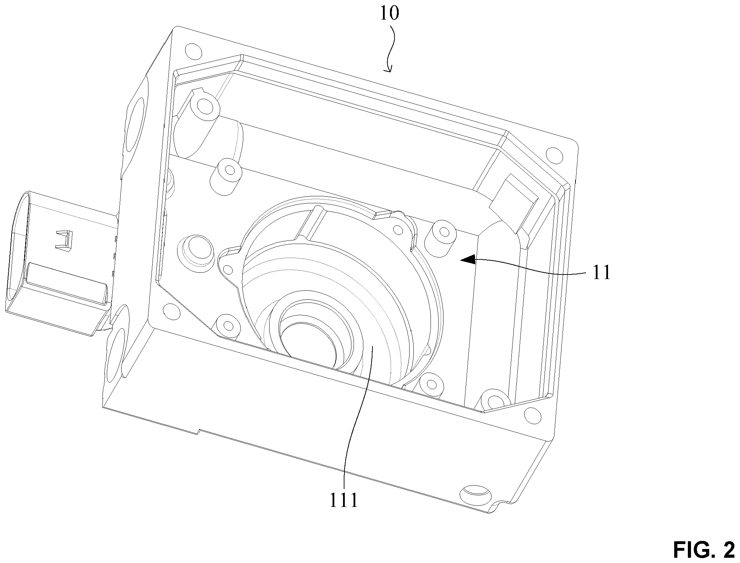

Referring to FIGS. 1 and 2, an electronic control actuator 100 comprises a housing, a transmission structure 30, and a drive unit 50; the housing comprises an installation space (not shown); the transmission structure 30 and the drive unit 50 are disposed in the installation space; the drive unit 50 is in transmission connection to the transmission structure 30; and the drive unit 50 drives the rotation of the transmission structure 30.

Preferably, the housing comprises a base 10 and a cover plate 20; the base 10 comprises an opening on one side, and the cover plate 20 is disposed on the opening; further, the installation space is formed by the cover plate 20 and the base 10; the installation space comprises a first installation space 11 and a second installation space (not shown); the first installation space 11 is disposed in the base 10 and comprises a first mounting position 111; the first mounting position 111 protrudes outside the base 10; the drive unit 50 is disposed in the first mounting position 111; the second installation space is disposed on the cover plate 20 and communicates with the first installation space 11 to form the installation space.

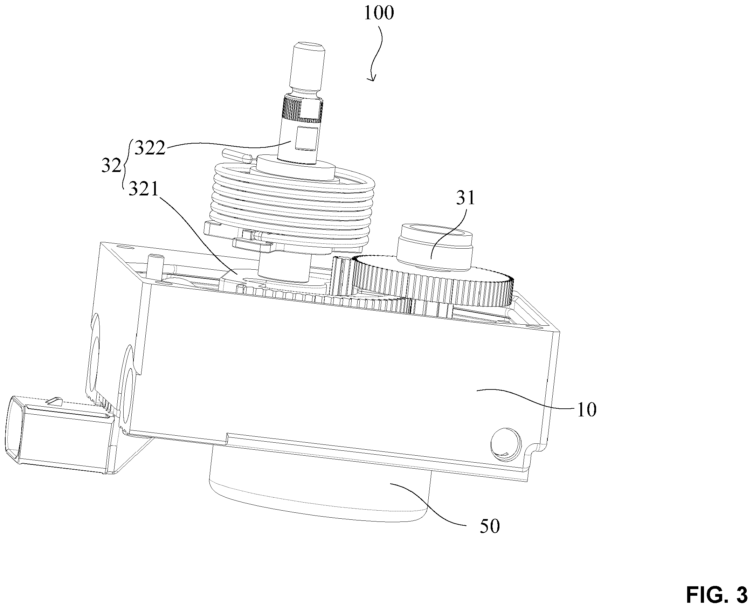

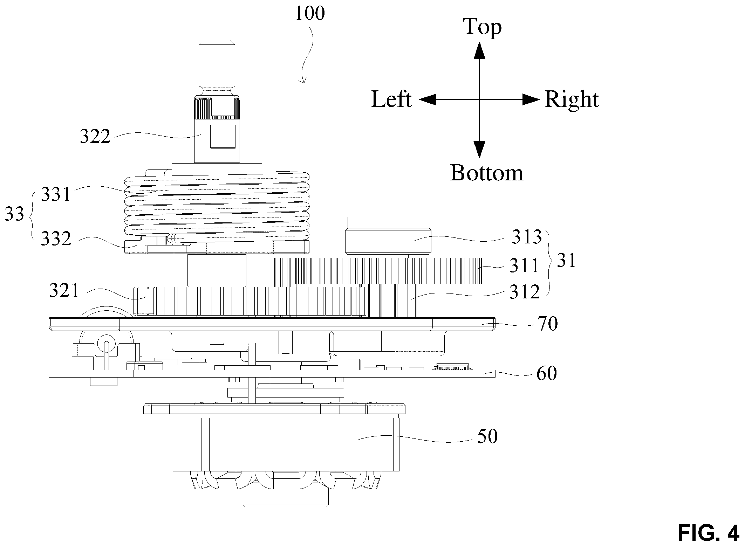

Preferably, referring to FIGS. 3 and 4, the electronic control actuator 100 further comprises a circuit board 60 and a mounting plate 70; the mounting plate 70 is disposed in the first installation space 11 and fixed between the transmission structure 30 and the drive unit 50; the transmission structure 30 is disposed on the mounting plate 70; the circuit board 60 is disposed between the mounting plate 70 and the drive unit 50 and electrically connected to the drive unit 50; when the drive unit 50 is connected to the transmission structure 30, the transmission structure 30 is exposed outside the first installation space 11.

The transmission structure 30 comprises a reduction gear 31 and a transmission assembly 32; the driving unit 50 is connected to the reduction gear 31, and the reduction gear 31 is in transmission connection to the transmission assembly 32; the reduction gear 31 comprises a first gear 311, a second gear 312, and a transmission shaft 314; the transmission shaft 314 is disposed on the mounting plate 70; the first gear 311 and the second gear 312 sleeve the transmission shaft 314; the first gear 311 is disposed above the second gear 312; both ends of the transmission shaft 314 are provided with first bearings 313; the first bearing 313 below the transmission shaft 314 is fixed between the transmission shaft 314 and the mounting plate 70; the first bearing 313 above the transmission shaft 314 is fixed above the first gear 311; the transmission shaft 314 is fixed on the cover plate 20 through the first bearing 313. Understandably, the second gear 312 is disposed between the mounting plate 70 and the first gear 311, optionally, the mounting plate 70 is disposed between the first gear 311 and the second gear 312.

Preferably, the transmission assembly 32 comprises an output shaft 322, a sector gear 321, and a third bearing 324; the output shaft 322 is disposed on the mounting plate 70; the third bearing 324 is disposed between the output shaft 322 and the mounting plate 70; the sector gear 321 is disposed on the output shaft 322; the second gear 312 and the sector gear 321 mesh together via teeth; the cover plate 20 comprises an opening 2; one end of the output shaft 322 passes through the opening 21 and is exposed outside the cover plate 20.

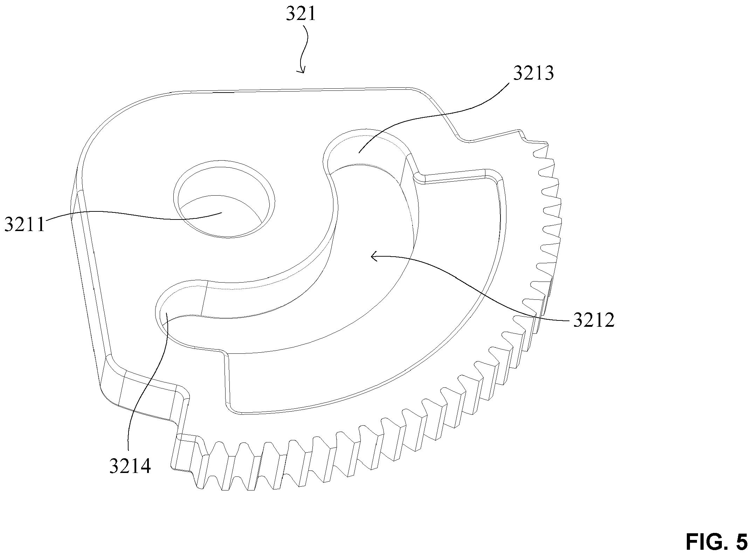

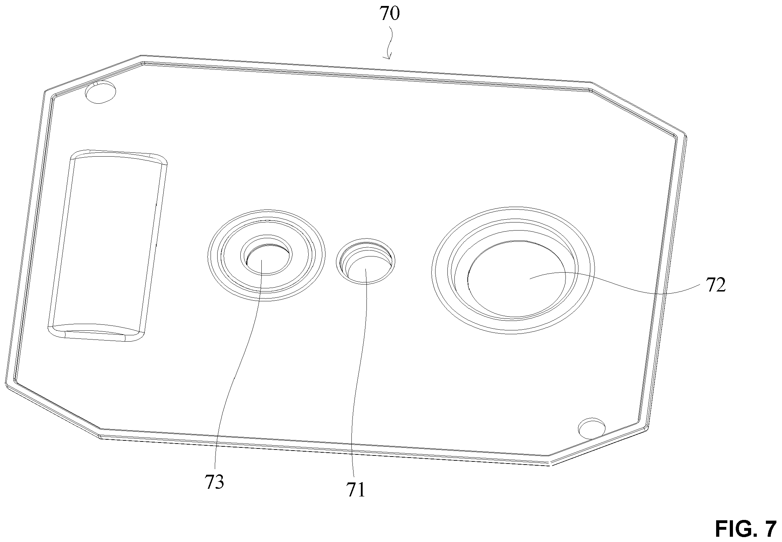

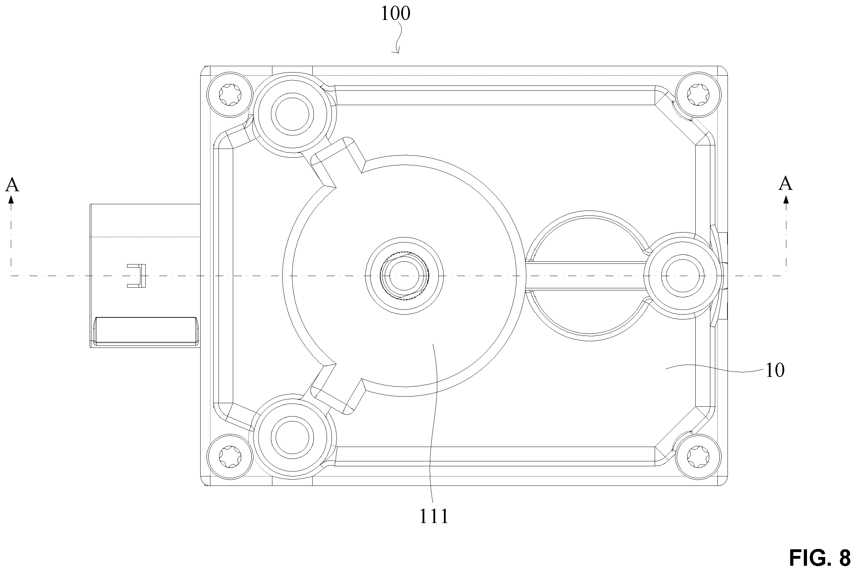

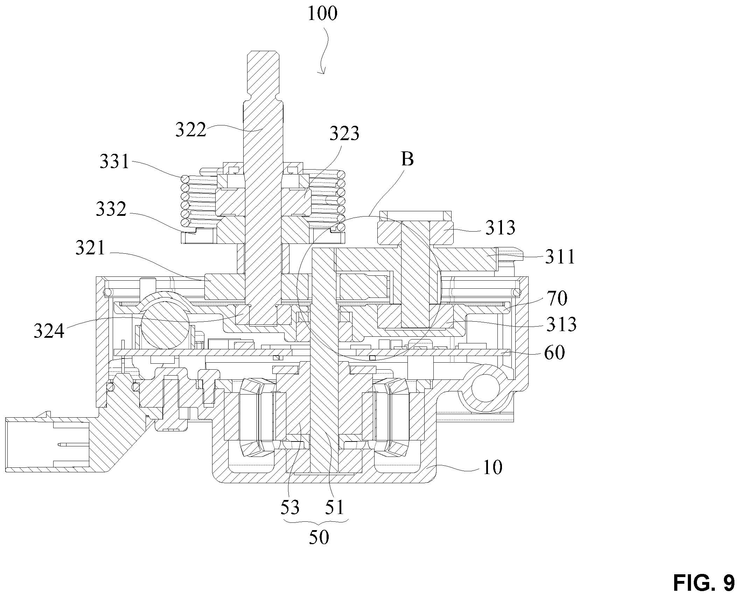

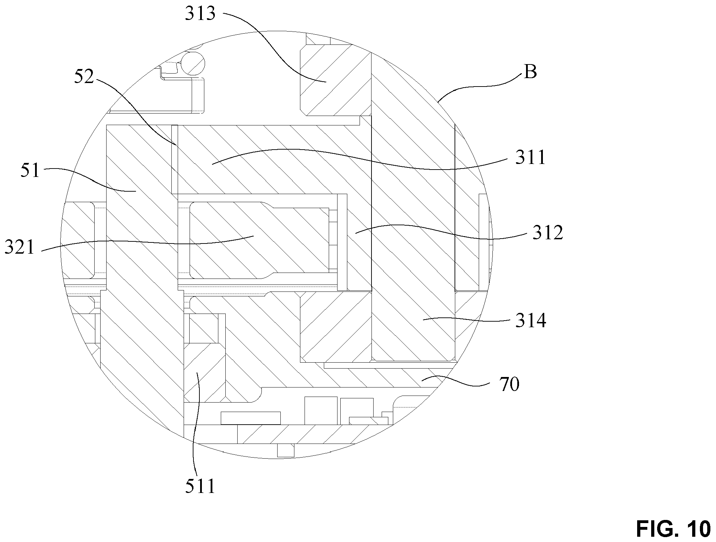

Further, referring to FIGS. 5 to 10, the sector gear 321 comprises a second shaft hole 3211 and a drive shaft hole 3212; the sector gear 321 is disposed on the output shaft 322 through the second shaft hole 3211; the drive shaft hole 3212 is a curved slot formed on the sector gear 321; a driving gear 52 passes through the first shaft hole 71 and the curved slot, successively, to mesh with the first gear 311; or the driving gear 52 passes through the curved slot and the first shaft hole 71, successively, to mesh with the first gear 311. Further, a distance d between a motion trajectory of the drive shaft 51 within the drive shaft hole 3212 and a root circle of the sector gear 321 is constant.

Preferably, the transmission structure 30 further comprises a reset structure 33 disposed on the output shaft 322; the reset structure 33 comprises a spring 331 and a fixing plate 332; the fixing plate 332 is fixed on the output shaft 322; the spring 331 is wrapped around the output shaft 322; one end of the spring 331 is fixed on the fixing plate 332, and the other end of the spring 331 is fixed on the cover plate 20; further, a second bearing 323 is disposed between the spring 331 and the output shaft 322; as the output shaft 322 rotates, the fixing plate 332 rotates as well, causing the spring 331 to be compressed or stretched.

Specifically, the working principle of the electronic control actuator 100 is as follows: when the driving unit 50 works, the reduction gear 31 is driven by the driving unit 50 to rotate; the sector gear 321 is meshed with the reduction gear 31 and rotates as well, causing the output shaft 322 to rotate; the spring is driven by the output shaft 322 and is stretched or compressed; when the driving unit 50 stops working, the reduction gear 31, the sector gear 321 and the output shaft 322 stop rotating; the spring 331 returns to its original shape by driving the fixing plate 332 and the output shaft 322 to rotate in the opposite direction with a deformation force.

Preferably, the drive unit 50 comprises a drive shaft 51, a driving gear 52, and a drive motor 53; the drive motor 53 is disposed in the first mounting position 111; the drive shaft 51 is rotatably connected to the drive motor 53; and the driving gear 52 sleeves the drive shaft 51.

Preferably, the mounting plate 70 is provided with a first shaft hole 71, a second mounting position 72 and a third mounting position 73; the transmission shaft 314 is disposed in the second mounting position 72; and the output shaft 322 is disposed in the third mounting position 73; one side of the mounting plate 70 faces the driving unit 50; the second mounting position 72 and the third mounting position 73 protrude toward the one side of the mounting plate; the first bearing 313 is disposed between the transmission shaft 314 and the mounting plate 70; and the third bearing 324 is disposed between the output shaft 322 and the mounting plate 70.

Further, one end of the drive shaft 51 passes through the first shaft hole 71 and the drive shaft hole 3212 and is in transmission connection to the reduction gear 31; the driving gear 52 sleeves one end of the drive shaft 51 and is meshed with the first gear 311. Understandably, the curved slot comprises a first end 3213 and a second end 3214; the driving gear moves between the first end 3213 and the second end 3214 so as to avoid collisions with the driving gear 52.

Further, the first gear 311 has a greater radius than the second gear 312; the drive shaft 51 passes through the drive shaft hole 3212; the driving gear 52 sleeves one end of the drive shaft 21 and is meshed with the first gear 311; the sector gear 321 is meshed with the second gear 312. Understandably, the first gear 311 is disposed above the sector gear 321; and a part of the sector gear 321 is disposed between the sector gear 321 and the mounting plate 70. Understandably, a distance between the first gear 311 and the mounting plate 70 is greater than the width of the sector gear 321, so that a collision between the first gear 311 and the mounting plate 70 is safely avoided.

Preferably, a gap (not shown) is formed between the reset structure 33 and the sector gear 321. Understandably, the drive shaft 51 passes through the drive shaft hole 3212 and is meshed with the first gear 311; the gap prevents collision between the drive shaft 51 and the reset structure 33, so as to protect the drive shaft 51 and the driving gear 52.

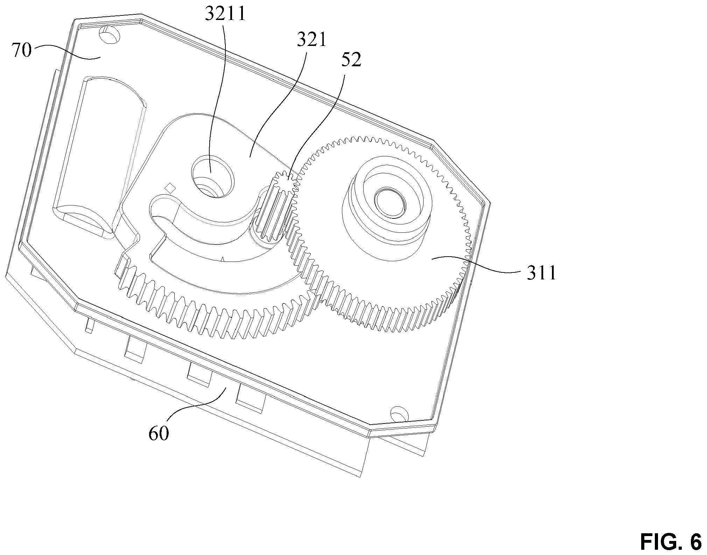

For example, referring to FIGS. 5 and 6, when the drive motor 53 is turned on, the drive shaft 51 drives the sector gear 321 to rotate clockwise; when the sector gear 321 rotates to a maximum clockwise angle, the driving gear 52 abuts against the first end 3213 of the curved slot. When the drive motor 53 is turned off, the sector gear 321 rotates counterclockwise by the elastic force of the spring 331; the sector gear 321 rotates to a maximum counterclockwise angle; and the driving gear 52 abuts against the second end 3214 of the curved slot.

Preferably, the electronic control actuator 100 further comprises an angle sensor (not shown); the angle sensor is disposed on the sector gear 321 and electrically connected to the circuit board 60; and the angle sensor is configured to detect the rotation angle of the sector gear 321; the angle sensor is provided with an angle detector; the angle detector is configured to rotate with the sector gear 321 so as to measure the rotation angle of the sector gear 321.

Preferably, the electronic control actuator 100 is further provided with an alarm sensor, the alarm sensor is disposed on the circuit board 60 and electrically connected between the angle detector and the circuit board 60; the rotation angle of the sector gear 321 is detected by the angle detector; the drive motor 53 is started or closed periodically; as the sector gear 321 moves, when a distance between the sector gear 321 and the first end 3213 or between the sector gear 321 and the second end 3214 is smaller than a set distance, the alarm sensor sends alerts to remind the user to adjust the rotation time of the drive motor 53 and the cycle of start-stop operation of the drive motor 53 to avoid collision between the driving gear 52 and the sector gear 321.

### Example 2

An exhaust-gas treatment system comprises the electronic control actuator 100.

Preferably, the exhaust-gas treatment system further comprises an exhaust-gas circulation pipeline provided with a valve shaft; the valve shaft is connected to the output shaft 322. For example, when the electronic control actuator 100 works, the drive motor 53 is powered, causing the drive shaft 51 to drive the rotation of the reduction gear 31; the transmission assembly 32 is used in conjunction with the reset structure 33 to open or close the valve; the rotation of the transmission assembly 32 is precisely controlled, facilitating to adjustment of the opening of the valve; the exhaust gas is thus fully recycled in the vehicle, harmful substances are reduced from the exhaust gas; the harmful substances contains nitrogen monoxide and carbon monoxide; for example, the exhaust-gas treatment system is a turbocharger system, exhaust brake system, or an exhaust-gas recirculation system.

### Example 3

A vehicle comprises the exhaust-gas treatment system through which the exhaust gas is efficiently purified; the vehicle is car, a truck, or a commercial vehicle.

It will be obvious to those skilled in the art that changes and modifications may be made, and therefore, the aim in the appended claims is to cover all such changes and modifications.

## Claims

1. An electronic control actuator (100), **characterized by** comprising: a housing, a transmission structure (30), and a drive unit (50); wherein the housing comprises an installation space; the transmission structure (30) and the drive unit (50) are disposed in the installation space; the drive unit (50) is in transmission connection to the transmission structure (30);
the drive unit (50) comprises a drive shaft (51) and a driving gear (52); the driving gear (52) sleeves the drive shaft (51); the transmission structure (30) comprises a reduction gear (31) and a transmission assembly (32); the reduction gear (31) and the transmission assembly (32) are disposed in the installation space; the reduction gear (31) is meshed with the driving gear (52); the transmission assembly (32) is in transmission connection to the reduction gear (31); and
the transmission assembly (32) comprises a drive shaft hole (3212); the drive shaft (51) passes through the drive shaft hole (3212) and is in transmission connection to the reduction gear (31); as the drive unit (50) works, the drive shaft (51) rotates, causing the reduction gear (31) and the transmission assembly (32) to rotate as well.

2. The electronic control actuator of claim 1, **characterized in that** the electronic control actuator further comprises a mounting plate (70) disposed between the transmission structure (30) and the drive unit (50); the mounting plate (70) comprises a first shaft hole (71); the driving gear (52) passes through the first shaft hole (71) and is meshed with the reduction gear (31).

3. The electronic control actuator of claim 2, **characterized in that** the mounting plate (70) further comprises a third mounting position (73); the transmission assembly (32) further comprises an output shaft (322) and a sector gear (321); the output shaft (322) is disposed in the third mounting position (73); the sector gear (321) sleeves the output shaft (322); and the sector gear (321) is meshed with the reduction gear (31).

4. The electronic control actuator of claim 3, **characterized in that** the mounting plate (70) further comprises a second mounting position (72); the reduction gear (31) comprises a transmission shaft (314), a first gear (311), and a second gear (312); the transmission shaft (314) is disposed in the second mounting position (72); the first gear (311) sleeves the transmission shaft (314) and is meshed with the driving gear (52); the second gear (312) sleeves the transmission shaft (314) and is meshed with the sector gear (321); the second gear (312) is disposed between the mounting plate (70) and the first gear (311), or the mounting plate (70) is disposed between the first gear (311) and the second gear (312).

5. The electronic control actuator of claim 4, **characterized in that** the drive shaft hole (3212) is a curved slot formed on the sector gear (321); the driving gear (52) passes through the first shaft hole (71) and the curved slot to mesh with the first gear (311), or the driving gear (52) passes through the curved slot and the first shaft hole (71) to mesh with the first gear (311).

6. The electronic control actuator of claim 1, **characterized in that** a distance d between a motion trajectory of the drive shaft (51) within the drive shaft hole (3212) and a root circle of the sector gear (321) is constant.

7. The electronic control actuator of any of claims 3-6, **characterized in that** the transmission structure (30) further comprises a reset structure (33) disposed on the output shaft (322); a gap is formed between the reset structure (33) and the sector gear (321); the reset structure (33) comprises a spring (331) and a fixing plate (332); the fixing plate (332) is fixed on the output shaft (322) and comprises a fixed position; the spring (331) is wrapped around the output shaft (322); one end of the spring (331) is connected to the fixed position; and the other end of the spring (331) is connected to housing.

8. An exhaust-gas treatment system comprising the electronic control actuator (100) of any of claims 1-7.

9. The exhaust-gas treatment system of claim 8, **characterized in that** the exhaust-gas treatment system further comprises an exhaust-gas circulation pipeline provided with a valve shaft; the valve shaft is connected to the output shaft (322) of the electronic control actuator (100) to open or close a valve.

10. A vehicle comprising the exhaust-gas treatment system of claim 8 or 9.
